# EUROPÄISCHE PATENTSCHRIFT

(11) **EP 3 347 123 B1**
(45) Veröffentlichungstag und Bekanntmachung des Hinweises auf die Patenterteilung: **13.01.2021**
(21) Anmeldenummer: 16747745.4
(22) Anmeldetag: 12.07.2016
(51) Int. Cl.: B01J 8/18, B01J 2/16

(54) **PRODUKTBEHÄLTER EINER WIRBELSCHICHTANLAGE UND WIRBELSCHICHTANLAGE**
PRODUCT CONTAINER FOR A FLUIDIZED BED INSTALLATION AND FLUIDIZED BED INSTALLATION
RÉCIPIENT À PRODUIT D'UNE INSTALLATION À LIT FLUIDISÉ ET INSTALLATION À LIT FLUIDISÉ

(30) Priorität: 08.09.2015 DE 102015217122
(43) Veröffentlichungstag der Anmeldung: 18.07.2018
(73) Patentinhaber: Hüttlin GmbH, 79650 Schopfheim (DE)
(72) Erfinder: KAUFMANN, Harald, 79400 Wollbach (DE)
(74) Vertreter: DREISS Patentanwälte PartG mbB
(86) Internationale Anmeldenummer: PCT/EP2016/066490
(87) Internationale Veröffentlichungsnummer: WO 2017/041931

(56) Entgegenhaltungen:
- WO-A2-2011/031244
- US-A1- 2003 070 318
- US-A1- 2008 107 570

## Beschreibung

### Stand der Technik

Die vorliegende Erfindung betrifft einen Produktbehälter einer Wirbelschichtanlage und eine Wirbelschichtanlage, welche den Produktbehälter aufweist.

In der chemischen Verfahrenstechnik und insbesondere bei der Herstellung pharmazeutischer Produkte werden häufig Wirbelschichtanlagen eingesetzt, um zum Beispiel einen Ausgangsstoff in Form eines Schüttgutes weiter zu verarbeiten. Die Weiterverarbeitung kann zum Beispiel in einer thermischen und/oder materialbasierten Behandlung bestehen.

Dazu weist eine Wirbelschichtanlage einen in einem unteren Bereich vorgesehenen Produktbehälter und einen darüber angeordneten Prozessbehälter auf. Diese werden im Betrieb miteinander zu einem durchgehenden Wirbelschichtbehälter verbunden. Im unteren Bereich des Produktbehälters ist ein Verteilerboden vorgesehen. Dieser weist Öffnungen oder Durchbrechungen auf, über welche ein Gasstrom von unten in den darüber liegenden Raum zur eingeleitet werden kann. Über die Wechselwirkung zwischen dem eingeleiteten Gas und den Bestandteilen des Schüttgutes wird die Wirbelschicht ausgebildet, die einen flüssigkeitsähnlichen Zustand einnehmen kann.

Problematisch bei derartigen Wirbelschichtanlagen ist, dass Produktebehälter und Prozessbehälter auf eine bestimmte Produktmenge ausgelegt sind. Dies bedeutet, dass je nach zu erzielender Produktmenge die Anlage fest ausgelegt ist. Um die Flexibilität der Anlage zu erhöhen können alternativ unterschiedlich große Produktbehälter vorgehalten werden. Dies hat ein erhöhtes Investitionsvolumen für Wirbelschichtanlage und erhöhte Betriebskosten zur Folge.

Die US 2008/0107570 A1 offenbart einen Produktbehälter für eine Wirbelschichtanlage gemäß dem Oberbegriff des Anspruchs 1. Die US 2003/0070318 A1 und die WO 2011/031244 A2 beschreiben ebenfalls Produktbehälter für eine Wirbelschichtanlage und Wirbelschichtanlagen als solche.

Der Erfindung liegt die Aufgabe zu Grunde, einen Produktbehälter für eine Wirbelschichtanlage und eine Wirbelschichtanlage als solche zu schaffen, bei welchen eine flexible Volumenanpassung an die jeweiligen Betriebsbedingungen möglich ist.

Die Aufgabe wird bei einem Produktbehälter für eine Wirbelschichtanlage mit den Merkmalen des Anspruchs 1 und bei einer Wirbelschichtanlage mit den Merkmalen des Anspruchs 11 gelöst. Vorteilhafte Weiterbildungen sind Gegenstand der jeweiligen abhängigen Ansprüche.

### Offenbarung der Erfindung

Der erfindungsgemäße Produktbehälter mit den Merkmalen des Anspruchs 1 weist demgegenüber den Vorteil auf, dass bei festem Grundvolumen des Produktebehälters das effektive oder wirksame Volumen zur Ausbildung des Produkts an die jeweiligen Erfordernisse hinsichtlich der zu erzielenden Produktmenge angepasst werden kann, so dass mit einem einzelnen Produktbehälter verschiedene Produktvolumina behandelbar und herstellbar sind. Dadurch wird die Anzahl vorzuhaltender individueller Produktbehälter mit unterschiedlichen Volumen verringert und die Anlage als solche ist flexibler einsetzbar. Dies wird erfindungsgemäß mit den Merkmalen des Anspruchs 1 dadurch erreicht, dass ein Produktbehälter einer Wirbelschichtanlage geschaffen wird mit einer Produktbehälterwand, einem Produktbehälterboden, einer dem Produktbehälterboden gegenüberliegenden Produktbehälteröffnung, einem Verteilerboden zwischen Produktbehälterboden und Produktbehälteröffnung und mindestens einem Volumenreduzierelement, welches am Verteilerboden an der der Produktbehälteröffnung zugewandten Seite des Verteilerbodens lösbar anbringbar ist und durch welches das freie Volumen des Produktbehälterzwischen dem Verteilerboden und der Produktbehälteröffnung reduziert ist. Das Vorsehen mindestens eines Volumenreduzierelementes am Verteilerboden an der der Produktbehälteröffnung zugewandten Seite des Verteilerbodens reduziert das im Produktbehälter zur Verfügung stehende effektive Volumen, so dass durch Montage und Demontage des Volumenreduzierelements zumindest zwei unterschiedliche Produktvolumina mit ein und demselben Produktbehälter behandelbar oder herstellbar sind.

Über eine Mehrzahl unterschiedlicher Volumenreduzierelemente kann der Einsatz des erfindungsgemäßen Produktbehälters weiter flexibler gestaltet werden.

Die Unteransprüche zeigen bevorzugte Weiterbildungen der Erfindung.

Bei einer bevorzugten Ausführungsform des erfindungsgemäßen Produktbehälters weist das Volumenreduzierelement einen Bodenbereich und einen Mantel auf. Der Bodenbereich des Volumenreduzierelementes kann vorteilhafterweise an oder auf dem Verteilerboden lösbar anbringbar sein. Der Mantel bewirkt im Betrieb des erfindungsgemäßen Produktbehälters, insbesondere dann, wenn er nicht konkav und weiter vorzugsweise konvex ist, dass auf dem Volumenreduzierelement keine Produktbestandteile aufliegen oder lange verweilen. Sämtliche Produktbestandteile im Produktbehälter rutschen vom konvexen Mantel des Volumenreduzierelementes ab und fallen in den Bereich der Wirbelschicht und/oder des Verteilerbodens zurück. Dadurch werden Toträume vermieden oder zumindest reduziert. Durch das Vorsehen eines Bodenbereichs beim Volumenreduzierelement ergibt sich die Möglichkeit einer besonders einfachen und zuverlässigen Montage des Volumenreduzierelements an oder auf dem Verteilerboden.

Besonders einfach lassen sich Volumenreduzierelemente für den erfindungsgemäßen Produktbehälter herstellen, wenn das Volumenreduzierelement konusförmig ist und insbesondere die Form eines senkrechten Kreiskegels aufweist. Beim Vorsehen einer Mehrzahl von Volumenreduzierelementen können diese insbesondere formähnlich zueinander ausgebildet sein, so dass sie beim Lagern ineinander gestapelt oder geschachtelt werden können und dadurch in ihrer Gesamtheit weniger Raum einnehmen. Die Formähnlichkeit erleichtert auch im Betrieb das Ineinanderschachteln einer Mehrzahl von Volumenreduzierelementen.

Gemäß einer weiteren bevorzugten Ausführungsform des erfindungsgemäßen Volumenbehälters werden Maßnahmen ergriffen, um das vom Volumenreduzierelement selbst eingeschlossene Volumen vom effektiven Volumen des Produktbehälters oberhalb des Verteilerbodens fluidmechanisch zu entkoppeln. Dies gelingt insbesondere dadurch, dass das Volumenreduzierelement im Übergang zwischen Mantel und Bodenbereich eine umlaufende Dichtung aufweist, mit welcher das Volumenreduzierelement auf dem Verteilerboden anordenbar ist.

Die Dichtung des Volumenreduzierelements schafft eine fluidmechanische Entkopplung zwischen dem Außenbereich des Mantels des Volumenreduzierelements und dem Innenbereich des Mantels des Volumenreduzierelements oberhalb des Verteilerbodens.

Das Volumenreduzierelement kann vorzugsweise durch Öffnungen im Verteilerboden, die zum Beispiel für Sprühdüsen vorgesehen sind, befestigt werden.

Innerhalb des Produktbehälters lassen sich gemäß einer weiteren bevorzugten Ausführungsform des Produktbehälters besonders günstige Eigenschaften für den Aufbau der Wirbelschicht oberhalb des Verteilerbodens realisieren, indem nämlich der Verteilerboden ein Anströmelement aufweist, welches am Verteilerboden auf der der Gefäßöffnung zugewandten Seite des Verteilerbodens angebracht ist. Dadurch wird erreicht, dass das zur Ausbildung der Wirbelschicht einströmende Gas in den Raum oberhalb des Verteilerbodens nicht direkt einströmt, sondern indirekt nach Wechselwirkung mit dem Anströmelement und insbesondere mit dessen Unterseite und dem Boden. Auf diese Art und Weise kann zum Beispiel eine gleichmäßige, homogene Gasverteilung über dem Verteilerboden der Wirbelschicht erzielt werden.

Das Anströmelement ist dabei zum Anströmen von einer der Gefäßöffnung abgewandten Seite des Verteilerbodens ausgebildet. Das Anströmen kann mittels durch den Verteilerboden hindurch zugeführtes Gas erfolgen.

Eine besonders vorteilhafte Ausgestaltung des erfindungsgemäßen Produktbehälters ergibt sich dann, wenn das Volumenreduzierelement das Anströmelement im am Verteilerboden angebrachten Zustand umschließt. Besonders einfache Verhältnisse stellen sich dabei dann ein, wenn das Anströmelement formähnlich zum Volumenreduzierelement ausgebildet ist und insbesondere mit einer gleichen geometrischen Form wie das Volumenreduzierelement. Durch diese Maßnahmen ergibt sich eine besonders kompakte Anordnung im Inneren des Produktbehälters und oberhalb des Verteilerbodens.

Das Anströmelement kann bevorzugt als senkrechter Kreiskegel ausgebildet sein, vorzugsweise mit einem durchgehenden Mantel und einem Boden, wobei weiter bevorzugt der Boden des Anströmelementes an der der Gefäßöffnung zugewandten Seite des Verteilerbodens angebracht ist.

Der erfindungsgemäße Produktebehälter kann besonders flexibel eingesetzt werden, wenn das Volumenreduzierelement mit seiner Wirkung steuerbar, also bei Bedarf hinzugefügt werden kann. Dementsprechend ist es bei einer anderen bevorzugten Ausgestaltungsform des erfindungsgemäßen Produktbehälters vorgesehen, auf der der Produktbehälteröffnung zugewandten Seite des Verteilerbodens eine Hebeeinrichtung ausgebildet ist, welche eingerichtet ist, das mindestens eine Volumenreduzierelement zwischen mindestens einer ersten Stellung (A) und einer zweiten Stellung (B) zu bewegen. Das Volumenreduzierelement liegt dabei in der ersten Stellung (A) mit seinem Boden am Verteilerboden an. In der zweiten Stellung (B) ist es dagegen mit seinem Boden vom Verteilerboden beabstandet ist. In der zweiten Stellung (B) kann die Beabstandung insbesondere in Richtung auf die Produktbehälteröffnung zu und gegebenenfalls auch über diese hinaus erfolgen. Dadurch wird der für die Behandlung notwendige Raum oberhalb des Verteilerbodens von der beschränkenden Wirkung des Volumenreduzierelementes besonders effektiv befreit.

Besonders flexibel gestaltet sich der Einsatz des erfindungsgemäßen Produktbehälters dann, wenn eine Mehrzahl von Volumenreduzierelementen ausgebildet ist, welche insbesondere eine unterschiedliche Größe aufweisen und/oder jeweils einzeln oder auch in Kombination miteinander zum Einsatz gebracht werden. Je nach notwendigem Produktvolumen werden entsprechend unterschiedliche Volumenreduzierelemente verwendet, entweder einzeln oder gemeinsam, zum Beispiel auch in teilweise ineinander geschachtelter Form, wobei jeweils das äußerste und am Verteilerboden angebrachte Volumenreduzierelement die tatsächlich wirksame Volumenminderung des Produktbehälters definiert.

Besonders einfache Verhältnisse stellen sich ein, wenn zwei Volumenreduzierelemente ausgebildet und insbesondere ineinander geschachtelt vorgesehen werden. Es ergeben sich dann zwei oder drei wirksame Produktbehältervolumina, zum Beispiel mit einer maximalen Reduktion, wenn ein größeres Volumenreduzierelement mit dem ineinander geschachtelten kleineren Volumenreduzierelement am Verteilerboden montiert ist. Ein maximales Produktbehältervolumen ergibt sich, wenn keines der Volumenreduzierelemente am Verteilerboden montiert ist. Ein dazwischen liegendes effektives Produktbehältervolumen ergibt sich dann, wenn das kleinere der beiden Volumenreduzierelemente am Verteilerboden montiert ist, der größere der beiden Volumenreduzierelemente jedoch vom Verteilerboden und vom dort montierten kleineren Volumenreduzierelement beabstandet ist. Dazu ist es von Vorteil, wenn die Volumenreduzierelemente ineinander geschachtelt sind, sofern sie sich in ihren ersten Stellungen (A) befinden, und voneinander separiert sind, wenn sich das kleinere der Volumenreduzierelemente in der ersten Stellung (A) und das größere der Volumenreduzierelemente in der zweiten Stellung (B) befindet.

Bei einer anderen Ausführungsform des erfindungsgemäßen Produktbehälters nimmt ein Volumenreduzierelement oder umschreibt oder umfasst mit seinem Mantel ein Volumen oder schließt dieses ein, welches etwa 38 % des freien Volumens des Produktbehälters zwischen dem Verteilerboden und der Produktbehälteröffnung beträgt. Vorzugsweise nimmt ein Volumenreduzierelement oder umschreibt oder umfasst mit seinem Mantel ein Volumen oder schließt dieses ein, welches etwa 69 % des freien Volumens des Produktbehälters zwischen dem Verteilerboden und der Produktbehälteröffnung beträgt.

Es kann durch ein Volumenreduzierelement das freie Volumen des Produktbehälters zwischen dem Verteilerboden und der Produktbehälteröffnung in einem Bereich von etwa 38 % bis etwa 69 % reduziert sein.

Diese Anteile sind nicht zwingend, es können andere zweckmäßige Anteile durch Ausgestaltung der geometrischen Randbedingungen des jeweiligen Volumenreduzierelements gefunden werden. Auch können mehrere Volumenreduzierelemente in Kombination miteinander verwendete werden.

Gemäß einem anderen Aspekt betrifft die vorliegende Erfindung eine Wirbelschichtanlage als solche. Diese weist einen erfindungsgemäßen Produktbehälter und einen Prozessbehälter auf. Dabei schließt sich der Prozessbehälter mit einer Prozessbehälteröffnung an die Produktbehälteröffnung des Produktbehälters an oder ist an diese anschließbar.

### Kurzbeschreibung der Figuren

Unter Bezugnahme auf die beigefügten Figuren werden Ausführungsformen der Erfindung im Detail beschrieben.
- Figur 1: ist eine seitliche Querschnittsansicht einer ersten Ausführungsform des erfindungsgemäßen Produktbehälters einer Wirbelschichtanlage.
- Figur 2: zeigt eine andere Ausführungsform des erfindungsgemäßen Produktbehälters einer Wirbelschichtanlage, bei welcher eine Hebevorrichtung für das Volumenreduzierelement vorgesehen ist.
- Figur 3: zeigt eine Ausführungsform der erfindungsgemäßen Wirbelschichtanlage mit einem erfindungsgemäßen Produktbehälter und einem Prozessbehälter in seitlicher Querschnittsansicht.
- Figur 4: zeigt in perspektivischer Seitenansicht von oben eine andere Ausführungsform des erfindungsgemäßen Produktbehälters.
- Figur 5: zeigt in seitlicher Querschnittsansicht eine Ausführungsform des erfindungsgemäßen Produktbehälters mit mehreren Volumenreduzierelementen.
- Figur 6: zeigt in seitlicher Querschnittsansicht eine andere Ausführungsform der erfindungsgemäßen Wirbelschichtanlage.
- Figur 7: zeigt eine zur Ausführungsform der Figur 5 vergleichbare Ausführungsform des erfindungsgemäßen Produktbehälters einer Wirbelschichtanlage.
- Figur 8: zeigt eine Draufsicht auf den Produktbehälter aus Figur 7.
- Figuren 9, 10: zeigen einen Produktbehälter beziehungsweise eine Wirbelschichtanlage, welche einen Ausgangspunkt der vorliegenden Erfindung bilden.

### Bevorzugte Ausführungsformen der Erfindung

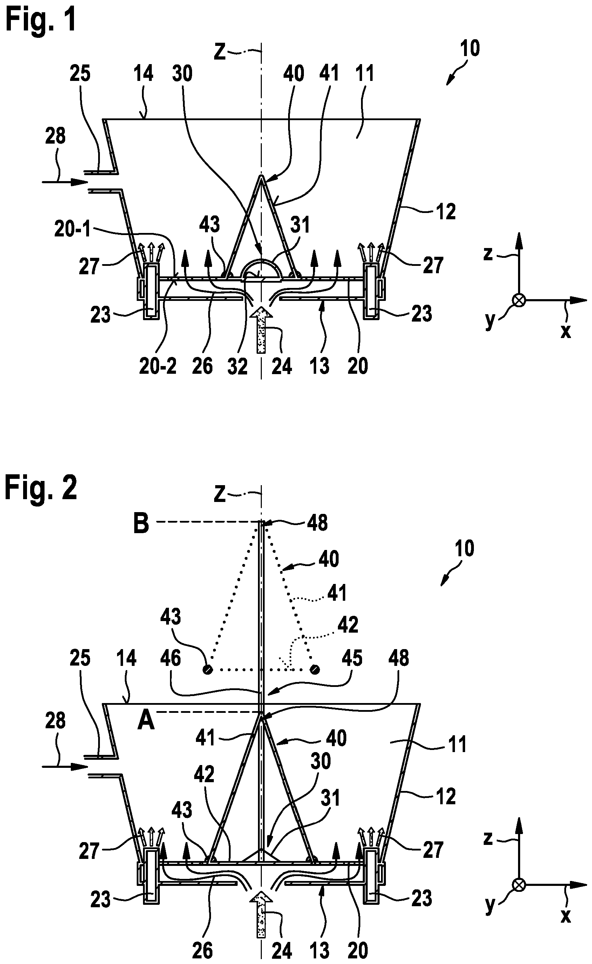

Nachfolgend werden unter Bezugnahme auf die Figuren 1 bis 8 Ausführungsbeispiele der Erfindung im Detail beschrieben.

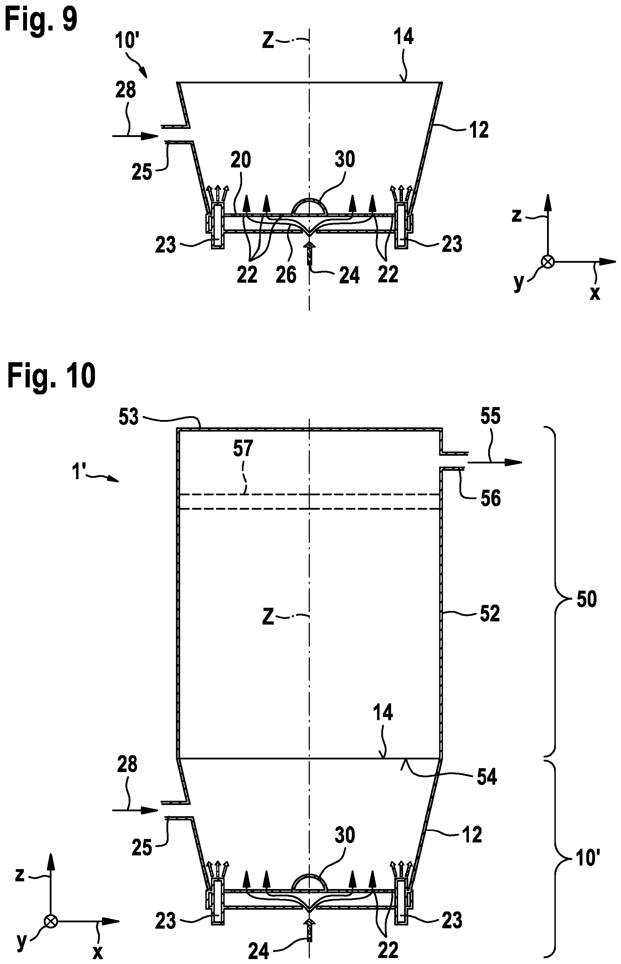

Die Figuren 9 und 10 beschreiben einen Produktbehälter 10' für eine Wirbelschichtanlage 1' sowie eine Wirbelschichtanlage 1' selbst, von denen die Erfinder bei der Entwicklung des erfindungsgemäßen Konzepts ausgegangen sind.

Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben. Die dargestellten Merkmale und weiteren Eigenschaften können in beliebiger Form von einander isoliert und beliebig miteinander kombiniert werden, ohne den Kern der Erfindung zu verlassen.

Figur 1 zeigt in schematischer und geschnittener Seitenansicht eine Ausführungsform eines erfindungsgemäßen Produktbehälters 10 für eine Wirbelschichtanlage 100.

Der Produktebehälter 10 wird von einer Produktbehälterwand 12 und einem Produktbehälterboden 13 gebildet. Der Produktebehälter 10 der Ausführungsform gemäß Figur 1 ist im Wesentlichen zu einer Achse Z als Symmetrieachse rotationssymmetrisch ausgebildet und weist auf der dem Produktbehälterboden 13 gegenüberliegenden Seite der Produktebehälterwand 12 einen Produktbehälteröffnung 14 auf. Die Symmetrieachse Z erstreckt sich hier parallel zur Raumrichtung z.

Der Produktbehälterboden 13 weist eine Öffnung auf, die eine Luft- oder Gaszufuhr 24 zur Ausbildung der Wirbelschicht im Inneren 11 des Produktbehälters 10 bildet. Im unteren Bereich des Inneren 11 des Produktebehälters 10 und benachbart zum Produktbehälterboden 13 aber von diesem beabstandet ist ein Verteilerboden 20 vorgesehen, der eine Bodenplatte 21 und eine Mehrzahl von Durchbrechungen 22 aufweist. Auf diese Weise kann über die Luft- oder Gaszufuhr 24 eingeführtes Gas, zum Beispiel in Form von Luft, den Bereich zwischen Produktbehälterboden 13 und Verteilerboden 20 verlassen und in den Raum oberhalb des Verteilerbodens 20 eindringen, um dort in Wechselwirkung mit dem vorliegenden Gut, insbesondere mit einem Schüttgut, die Wirbelschicht auszubilden.

Zur Behandlung des Materials in der Wirbelschicht sind bei dieser Ausführungsform ein oder mehrere Düsen 23 ausgebildet, über welche ein Behandlungsmittel 27 in das Innere 11 des Produktbehälters 10 oberhalb des Verteilerbodens 21 zugeführt werden kann, insbesondere durch Einsprühen eines Nebels oder dergleichen.

Die Düsen 23 können hinsichtlich ihrer Anzahl, Anordnung und Ausrichtung variiert werden. Dazu kann es vorgesehen sein, dass die Düsen 23 zum Beispiel lösbar montierbar und ausrichtbar am Verteilerboden 21 anordenbar sind. Dies kann zum Beispiel auch über ein oder mehrere der Durchbrechungen 22 im Verteilerboden 21 erfolgen.

In der Produktbehälterwand 12 ist oberhalb des Verteilerbodens 20 und unterhalb der Produktbehälteröffnung 14 eine Zufuhr 25 - zum Beispiel für Feststoff oder dergleichen seitlich ausgebildet - über welche ein zu behandelndes Gut 28, zum Beispiel ein Feststoff, vorzugsweise in Form eines Schüttgutes, eingebracht werden kann.

In einem zentralen Bereich ist auf dem Verteilerboden 21 auf der der Produktbehälteröffnung 14 zugewandten Seite 20-1 ein Anströmelement 30 ausgebildet. Dieses besitzt in der Ausführungsform gemäß Figur 1 eine halbkugelförmige Gestalt mit einem konvexen Mantel 31 in Form einer Halbkugelfläche und einem planaren Boden 32 in Form einer Kreisscheibe. Das Anströmelement 30 ist mit dem Boden 32 in Form der Kreisscheibe auf der Oberseite, das heißt auf der der Produktbehälteröffnung 14 zugewandten Seite 20-1 angebracht. Auf diese Weise wird im Betrieb das zugeführte Gas 26 von der Zufuhr 24 kommend die Unterseite des Bodens 32 des Anströmelements 30 anströmen, mit dieser wechselwirken und dadurch zur Seite, also radial nach außen abgelenkt und im Raum zwischen Produktbehälterboden 13 und Verteilerboden 20 verteilt, bevor das Gas 26 dann durch die Durchbrechungen 22 in der Bodenplatte 21 des Verteilerbodens 20 hindurch in das Innere 11 des Produktbehälters 10 oberhalb des Verteilerbodens 20 eintritt.

Erfindungsgemäß ist zusätzlich zum Anströmelement 30 oder alternativ zu diesem ein Volumenreduzierelement 40 ausgebildet. Dieses befindet sich ebenfalls auf der der Produktbehälteröffnung 14 zugewandten Seite 20-1 des Verteilerbodens 20 und ist mit einem Mantel 41 und einem Boden 42 ausgebildet. Der Mantel 41 ist hier der Mantel eines senkrechten Kreiskegels. Der Boden 42 kann eine durchgehende Kreisscheibe sein, die auch als Anströmelement fungieren kann. Alternativ kann der Boden 42 als Kreisscheibenring ausgebildet sein oder auch nur gebildet werden von der Unterkante des Mantels.

Im Bereich dieser Unterkante des Mantels oder im Übergang zwischen Boden 42 und Mantel 41 ist eine Dichtung 43 vorgesehen, die den Rand zwischen Mantel 41 und Boden 42 oder die Unterkante des Mantels 41 des Volumenreduzierelements 40 vollständig umläuft. Mittels der Dichtung 43 wird die Unterseite des Volumenreduzierelementes 40 oder - wenn das Volumenreduzierelement 40 unten offen ist - das Innere des Volumenreduzierelementes 40 gegenüber dem Inneren 11 des Produktbehälters 10 oberhalb des Verteilerbodens 20 fluidmechanisch entkoppelt.

Bei der Ausgestaltungsform gemäß Figur 1 ist das Volumenreduzierelement 40 über das Anströmelement 30 gestülpt. Das heißt, Anströmelement 30 und Volumenreduzierelement 40 sind ineinander geschachtelt. In diesem Fall der Figur 1 sind sowohl das Anströmelement 30 als auch das Volumenreduzierelement 40 rotationssymmetrisch aufgebaut zur Symmetrieachse Z.

Auf Grund der Abdichtung gegenüber der Unterseite bzw. dem Inneren des Volumenreduzierelements 40 mittels der Dichtung 43 wird das effektive Volumen des Inneren 11 des Druckbehälters 10 oberhalb des Verteilerbodens 20 um das Volumen des Inneren des Volumenreduzierelements 40 vermindert, so dass der erfindungsgemäße Produktbehälter 10 für zwei verschiedene Produktvolumina verwendbar ist, nämlich mit dem ursprünglichen Produktbehältervolumen oberhalb des Verteilerbodens 20 und mit einem um das Volumen des Inneren des Volumenreduzierelementes 40 verminderte Volumen.

Figur 2 zeigt eine andere Ausführungsform des erfindungsgemäßen Produktbehälters 10. Diese Ausführungsform ist ähnlich aufgebaut wie die Ausführungsform gemäß Figur 1, besitzt jedoch folgende Unterschiede.

Zum einen ist das Anströmelement 30 hier nicht als Halbkugel ausgebildet sondern besitzt die Form eines senkrechten Kreiskonus oder Kreiskegels.

Des Weiteren ist ein Volumenreduzierelement 40 mit Mantel 41 und Boden 42 sowie einer umlaufenden Dichtung 43 im Übergang zwischen Mantel 41 und Boden 42 vorgesehen, welches gegenüber dem Volumenreduzierelement 40 aus der Ausführungsform gemäß Figur 1 vergrößert ist.

Ferner ist eine Bewegungs- und Hebeeinrichtung 45 ausgebildet, an welche das Volumenreduzierelement 40 an seiner Spitze mit einer Halterung 47 gehaltert ist. Mittels der Bewegungs- und Hebeeinrichtung 45 kann das Volumenreduzierelement 40 von einer Stellung (A), bei welcher das Volumenreduzierelement 40 mit seinem Boden 42 auf der der Produktbehälteröffnung 14 zugewandten Seite 20-1 des Verteilerbodens 20 aufliegt, angehoben und in eine Stellung (B) überführt werden, bei welcher das Volumenreduzierelement 40 von der der Produktbehälteröffnung 14 zugewandten Seite 20-1 des Verteilerbodens 20 beabstandet ist.

Durch das Einnehmen der Position (B) wird im Inneren 11 des Produktbehälters 10 oberhalb des Verteilerbodens 20 ein vergrößertes effektives Volumen für den Betrieb der zu Grunde liegenden Wirbelschichtanlage 1 bereitgestellt, weil in diesem Fall keine fluidmechanische Entkopplung zum Inneren des Volumenreduzierelementes 40 mehr vorliegt.

In Figur 2 ist die beabstandete Position (B) für das Volumenreduzierelement 40 in gepunkteter Form schematisch dargestellt. Die Bewegungs- und Hebeeinrichtung 45 wird hier im Wesentlichen gebildet von einer Teleskopeinrichtung 46, mit welcher die Halterung 48 von der Stellung (A) zur Stellung (B) und in Folge dessen auch das gesamte Volumenreduzierelement 40 angehoben werden können.

Durch das Hin-und-Her-Bewegen des Volumenreduzierelementes 40 zwischen der abgesenkten ersten Position (A) und der separierten oder beabstandeten zweiten Position (B) ist der erfindungsgemäße Produktbehälter 10 für zwei verschiedene Produktvolumina verwendbar. Entsprechend kann durch vorsehen einer Mehrzahl von bewegbaren Volumenreduzierelementen 40 eine noch höhere Flexibilität mit verschiedenen Produktvolumina für den erfindungsgemäßen Produktbehälter 10 erreicht werden.

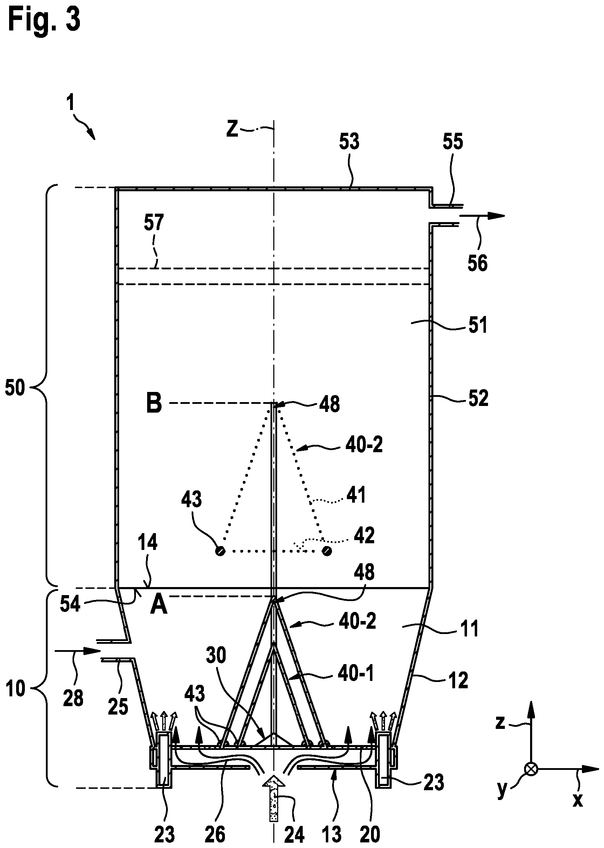

Figur 3 zeigt in schematischer und geschnittener Seitenansicht eine Ausführungsform einer erfindungsgemäßen Wirbelschichtanlage 1, bei welcher eine Ausführungsform des erfindungsgemäßen Produktbehälters 10 verwendet wird, der ähnlich gestaltet ist, wie der erfindungsgemäße Produktbehälter 10 gemäß Figur 2. Im Unterschied zu diesem besitzt der erfindungsgemäße Produktbehälter 10 gemäß Figur 3 jedoch zusätzlich zum Anströmelement 30 zwei Volumenreduzierelemente 40, die hier mit 40-1 und 40-2 bezeichnet sind. Die ersten und zweiten Volumenreduzierelemente 40-1 und 40-2 sind in der Darstellung gemäß Figur 3 ineinander geschachtelt und besitzen Formähnlichkeit und insbesondere Rotationssymmetrie zur gemeinsamen Symmetrieachse Z.

Bei der Ausführungsform gemäß Figur 3 ist das zweite Volumenreduzierelement 40-2 mit größerem Volumen als dem des ersten Volumenreduzierelementes 40-1 ausgebildet. Das zweite Volumenreduzierelement 40-2 umgibt das erste Volumenreduzierelement 40-1, wenn es sich in der ersten oder abgesenkten Position (A) befindet. Dadurch wird das Innere 11 des Produktebehälters 10 oberhalb des Verteilerbodens 20 in seinem effektiven Volumen maximal reduziert.

Die gepunktete Darstellung zeigt das zweite Volumenreduzierelement 40-2 in der angehobenen oder separierten zweiten Stellung (B), in welcher das erste Volumenreduzierelement 40-1, welcher in der Position (A) verbleibt, freigegeben ist und ein effektives Volumen im Inneren 11 des Produktbehälters 10 oberhalb des Verteilerbodens 20 zur Verfügung stellt, welches erweitert ist gegenüber dem bei Verwendung des zweiten Volumenreduzierelementes 40-2. Die Erweiterung des effektiven Volumens ergibt sich als Differenz der Volumina des ersten und des zweiten Volumenreduzierelements 40-1 und 40-2.

Oberhalb des Produktbehälters 10 ist der Prozessbehälter 40 angebracht, wobei die Produktbehälteröffnung 14 und die Prozessbehälteröffnung 54 so ausgebildet sind, dass diese aneinander angeflanscht werden können und sich dadurch ein im Wesentlichen vollständig geschlossener und durchgehender Behälter für die Wirbelschichtanlage 1 ergibt.

Der Prozessbehälter 50 als solcher besteht aus einer Prozessbehälterwand 52 und einem Prozessbehälterdach 53. Im Inneren des Prozessbehälters 50 ist im oberen Bereich ein Prozessfilter 57 ausgebildet. Dieser durchmisst das Innere 51 des Prozessbehälters 50 in Querrichtung vollständig und dient dazu, ungewünschte Bestandteile Prozessgas im Inneren 51 des Prozessbehälters 50 auszusondern und/oder umzusetzen bevor das Prozessgas als Abgas 56 über den Auslass 55 das Innere 51 des Prozessbehälters 50 verlässt.

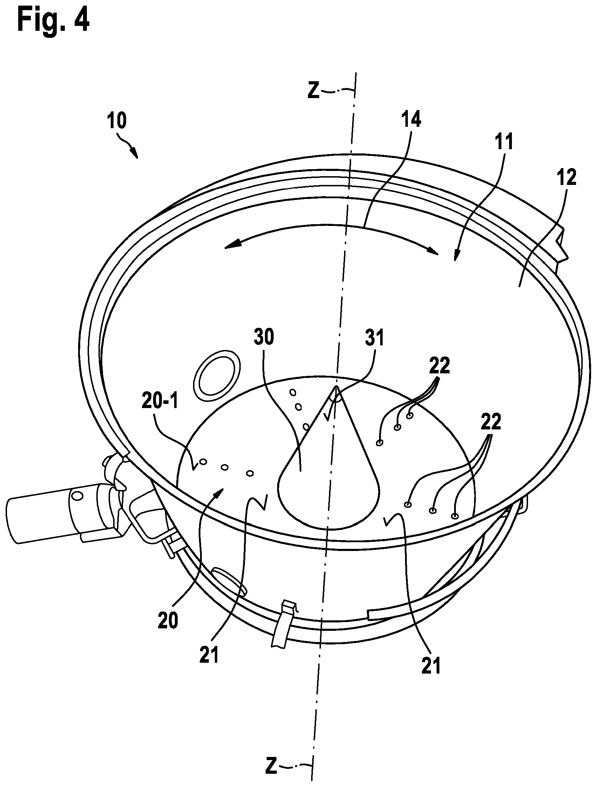

Figur 4 zeigt eine perspektivische Draufsicht auf eine andere Ausführungsform des erfindungsgemäßen Produktbehälters 10. Diese entspricht in etwa den Ausführungsformen gemäß den Figuren 1 bis 3, gegebenenfalls mit entferntem oder angehobenen Volumenreduzierelement 40. Im Inneren 11 des erfindungsgemäßen Produktbehälters 10 ist also ein Anströmelement 30 angeordnet und liegt auf der der Produktbehälteröffnung 14 zugewandten Seite 20-1 des Verteilerbodens 20 mit Bodenplatte 21 und Durchbrechungen 22 auf. Im Betrieb werden das gegebenenfalls vorhandene Anströmelement 30 oder weitere Volumenreduzierelemente 40 geringeren Volumens innenliegend von einem äußersten Volumenreduzierelemente 40 umschlossen. Das oder die Volumenreduzierelemente 40 sind in der Figur 4 nicht dargestellt. Über eine Halterung 48 können das oder die Volumenreduzierelement 40 mittels einer Bewegungs- und Hebeeinrichtung 45 von einer in Figur 4 nicht dargestellten ersten oder abgesenkten Position (A) in eine zweite oder angehobene Position (B) überführt werden.

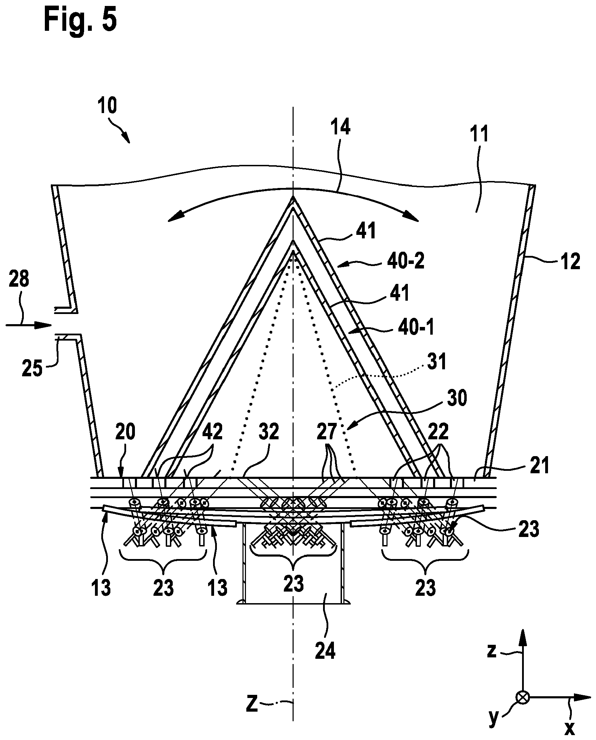

Figur 5 zeigt in schematischer und geschnittener Seitenansicht eine andere Ausführungsform des erfindungsgemäßen Produktbehälters 10. Bei dieser Ausführungsform sind ein Anströmelement 30 in Form eines senkrechten Kreiskonus sowie erste und zweite Volumenreduzierelemente 40-1 und 40-2 dargestellt, die das Anströmelement 30 umschließen und ineinander geschachtelt sind.

Über eine Mehrzahl von Düsen 23 kann z.B. über die Durchbrechungen 22 in der Bodenplatte 21 des Verteilerbodens 20 ein Behandlungsmittel 27, zum Beispiel ein Fluid, eingesprüht werden.

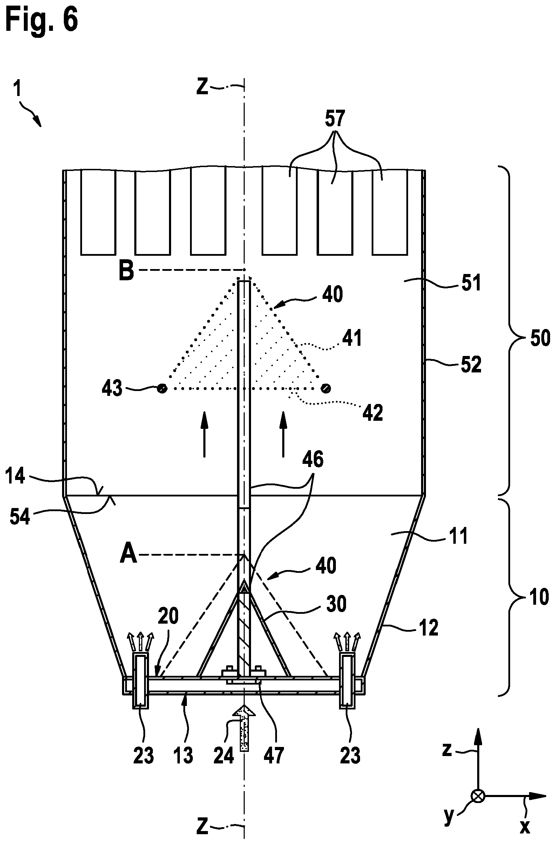

Figur 6 zeigt in schematischer und geschnittener Seitenansicht eine andere Ausführungsform einer erfindungsgemäßen Wirbelschichtanlage 1, bei welcher eine Ausführungsform des erfindungsgemäßen Produktbehälters 10 verwendet wird, die in etwa der Ausführungsform der Figur 2 entspricht.

Dargestellt ist hier jedoch für das Volumenreduzierelement 40 mit Mantel 41, Boden 42 und Dichtung 43 die zweite und angehobene oder beabstandete Position (B), welche durch Betrieb der Teleskopeinrichtung 46 der Bewegungs- und Hebeeinrichtung 45 über Kopplung des Volumenreduzierelements 40 mittels der Halterung 48 erreicht wird. Die Bewegungs- und Hebeeinrichtung 45 ist ihrerseits am Verteilerboden 20 mittels einer Befestigung 47 an der der Produktbehälteröffnung 14 zugewandten Seite 20-1 der Bodenplatte 21 angebracht.

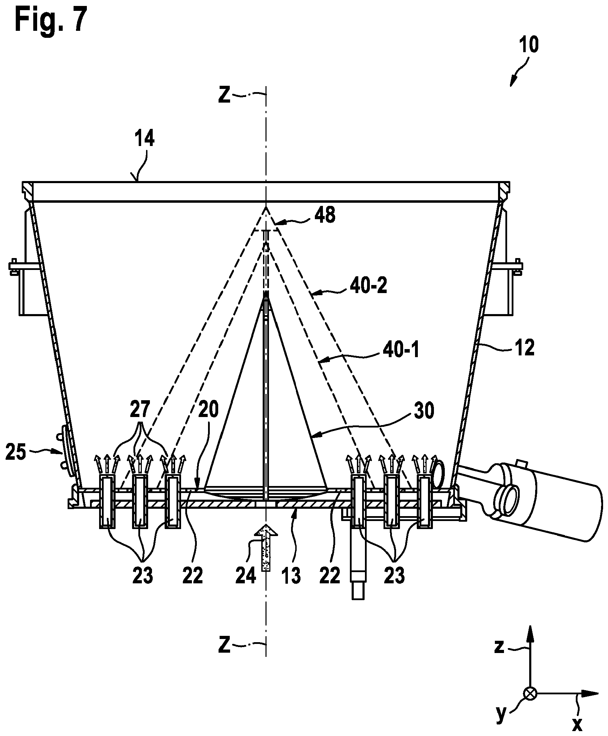

Figur 7 zeigt eine zu der Anordnung gemäß Figur 5 vergleichbare Anordnung für einen erfindungsgemäßen Produktbehälter 10. Hier ist explizit ein Anströmelement 30 in seitlicher Draufsicht dargestellt, wogegen die ersten und zweiten Volumenreduzierelemente 40-1 und 40-2 nur schematisch durch Strichelung angedeutet sind.

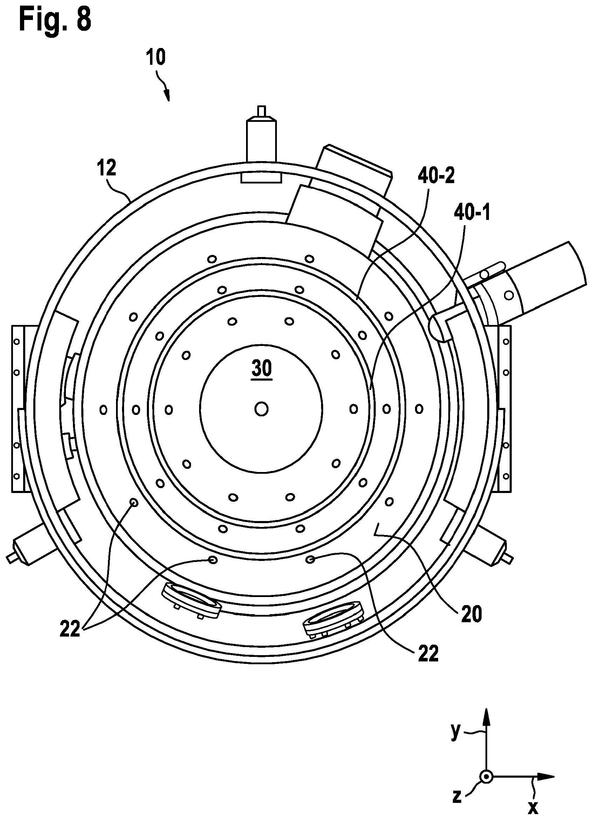

Figur 8 zeigt eine Draufsicht von oben auf die Ausführungsform der Figur 7. Zu erkennen ist wieder das Anströmelement 30 in Form eines senkrechten Kreiskonus. Angedeutet sind die Auflagebereiche der ersten und zweiten Volumenreduzierelemente 40-1 und 40-2, die mittels der jeweiligen Dichtung 43 realisiert würden.

Die Befestigung des Volumenreduzierelements 40-1 und 40-2 kann alternativ über die Öffnung 22 der Düsen 23 im Verteilerboden 20 erfolgen.

Die Figuren 9 und 10 zeigen Ausführungsformen für einen Produktbehälter 10' und für eine Wirbelschichtanlage 1' ohne Verwendung der erfindungsgemäß vorgesehenen Volumenreduzierelement 40, 40-1 und 40-2. Diese Anordnungen stellen daher den Ausgangspunkt der erfindungsgemäßen Maßnahmen dar.

Diese und weitere Aspekte der vorliegenden Erfindung und ihre Vorteile werden an Hand der folgenden Erläuterungen weiter vertieft: Wirbelschichtanlagen, z.B. zur Trocknung, Granulierung oder Beschichtung pulverförmiger Substanzen besitzen je nach apparativer Auslegung eine entsprechende Anlagengröße und Füllvolumen. Je nach ausgelegtem Füllvolumen ist der vorgesehene Prozess auf eine Minimal- und eine Maximalmenge vom Produkt festgeschrieben. Eine Mindestmenge von Produkt ist vorgeschrieben, damit das pulverförmige Produkt, von dem durch den Verteilerboden kommenden Luftstrom, ausreichend bewegt, fluidisiert werden kann. Bei der Granulierung ist eine Mindestmenge an Produkt über den im Boden eingebauten Sprühdüsen zwingend erforderlich, damit die versprühte Bindersubstanz im Kontakt mit dem Produkt steht. Das maximale Füllvolumen ist in der Regel mit der oberen Kante des Produktbehälters vorgegeben.

Figur 4 zeigt z.B. einen Produktbehälter 10 einer Wirbelschichtanlage einer bestimmten Baugröße, den Verteilerboden 20, hier als Luftverteilerboden, 18 Sprühdüsen 23 sowie ein konusförmiges Anströmelement 30 in der Mitte des Verteilerbodens 20. Um Wirbelschichtanlagen 1 in ihrem Einsatzgebiet flexibler zu gestalten, ist es erfindungsgemäß vorgesehen, ein oder mehrere Volumenreduzierelemente 40, 40-1, 40-2 z.B. in Form eines vergrößerten Innenkonus auszubilden, wie dies z.B. in Figur 5 dargestellt ist. Diese Volumenreduzierelemente 40-1, 40-2 als Innenkonus werden über das Anströmelement 30 als Innenkonus gestülpt eingebaut. Die maximale Höhe des zusätzlichen Innenkonus wird in der Regel durch die Höhe des Produktbehälters 10 begrenzt, wenn für den Produktbehälter 10 die Ausschwenkfunktion beibehalten werden soll. Der maximale Durchmesser der zusätzlichen Innenkonus, also der jeweiligen Volumenreduzierelemente 40, 40-1, 40-2, muss so gestaltet sein, dass der Verteilerboden 20 nicht vollständig bedeckt ist und stets Luft durch den Verteilerboden 20 in das Innere 11 des Produktbehälters 10 strömen kann. Vorzugsweise ist der maximale Durchmesser mit der äußersten Düsenreihe begrenzt. Diese sollten nicht überdeckt werden. Werden Sprühdüsen 23 im Verteilerboden 20 durch den neuen zusätzlichen Innenkonus überdeckt, so können diese ausgebaut werden. Die Befestigung des jeweiligen Volumenreduzierelementes 40, 40-1, 40-2 als Innenkonus kann durch die freigewordenen Öffnungen der Durchbrechungen 23 im Verteilerboden 20 erfolgen. Dies kann z.B. durch die Verwendung einer Art verlängerten Düsendummys mit Gewinde im vorderen Teil realisiert werden. Es muss dazu nur im selben Durchdringungswinkel ein Befestigungsgewinde im Konus angefertigt werden.

### Folgende Erweiterungen des Erfindungskonzeptes sind denkbar:

Zusätzlich kann ein jeweiliges Volumenreduzierelement 40, 40-1, 40-2 als Konus durch einen automatisierten Hebemechanismus 45 z.B. Teleskopzylinder 46 im Zentrum bei geschlossener Wirbelschichtanlage 100 und laufendem Betrieb nach oben bis unter die Prozessfilter 57 gefahren werden und somit variabel die Kapazität bei geschlossener Anlage vergrößert oder verkleinert werden. Nach erfolgter Produktentleerung und Reinigung kann der Zylinder 46 wieder in seine Ursprungsposition gefahren und die Anlage 100 geöffnet werden.

### Erfindungsgemäß werden unter anderem folgende Nachteile vermieden:

Bisher wird bei Anfrage unterschiedlicher Produktionsgrößen der gesamte bisherige Produktbehälter 10' in unterschiedlichen Größen ausgelegt und gebaut. Hierdurch entstehen hohe Investitionskosten. Des Weiteren ist der bisherige Produktbehälter 10' nicht einfach zu wechseln. Ein Umbau ist auf Grund der Größe der Anlagen nur mit zusätzlicher Hebetechnik zu realisieren und nimmt mehrere Stunden bis Tage in Anspruch. Alternativ wird für unterschiedliche Produktionsmengen eine zusätzliche Anlage mit größerer oder kleinerer Produktionskapazität errichtet.

In der heutigen pharmazeutischen Produktion nimmt die angefragte Herstellungsmenge bei den Produzenten mehr und mehr ab. Während vor 10 Jahren Abnehmer bzw. Distributoren von pharmazeutischen Produkten noch hohe Stückzahlen von Abpackungen bei den Produzenten bestellt haben, ist heute die durchschnittlich angefragte Menge deutlich und mit weiter fallender Tendenz zurückgegangen. Dieser Rückgang der Herstellungsmengen stellt erhöhte Anforderungen an die Flexibilität der Produktionsanlagen.

Mit der vorliegenden Erfindung wird die Flexibilität bereits bestehender sowie neuer Wirbelschichtanlagen 100 verbessert. Wirbelschichtanlagen 100 haben durch das nun variable Volumen einen deutlich größeren Einsatzbereich als zuvor. Es können ja nach Anfrage problemlos unterschiedliche Mengen in ein und derselben Anlage 100 hergestellt werden.

Ein Aspekt der vorliegenden Erfindung bezieht sich auf die Schaffung eines oder mehrerer Volumenreduzierelemente 40, 40-1, 40-2, z.B. jeweils als zusätzlicher Innenkonus. Dieser kann in unterschiedlichen Größen gefertigt sein und ermöglicht somit ein variables Volumen des Produktbehälters 10 in der Wirbelschichtanlage 100.

Der Umbau mit Einbringung des oder der Volumenreduzierelemente 40, 40-1, 40-2 kann durch eine einzelne Person erfolgen. Durch das Ausschwenken des Produktbehälters 10 kann ein Volumenreduzierelement 40, 40-1, 40-2 z.B. über das bestehende Anströmelement 30 als Innenkonus gesetzt werden. Lediglich überdeckte Sprühdüsen 23 müssen ggf. ausgebaut werden. Ein solcher Umbau ist in wenigen Minuten zu realisieren, so dass höchstens eine kurze Produktionsunterbrechung notwendig ist.

Für den Ausbau von Produktionskapazitäten vom Pilotmaßstab (10 - 50 kg pro Batch) lässt sich anhand der unterschiedlicher Volumenreduzierelemente 40, 40-1, 40-2 ein Scale-up in den Produktionsmaßstab (> 50 kg pro Batch) innerhalb einer Wirbelschichtanlage 100 durchführen.

Z.B. kann das Arbeitsvolumen des Produktbehälter 10 von ursprünglich 1,6 m³ mit einem zusätzlichen ersten Volumenreduzierelement 40-1 auf 1 m³ und mit einem zusätzlichen zweiten Volumenreduzierelement 40-2 auf 0,5 m³ reduziert werden.

## Patentansprüche

1. Produktbehälter für eine Wirbelschichtanlage (1),
mit:
- einer Produktbehälterwand (12),
- einem Produktbehälterboden (13),
- einer dem Produktbehälterboden (13) gegenüberliegenden Produktbehälteröffnung (14),
- einem Verteilerboden (20) zwischen Produktbehälterboden (13) und Produktbehälteröffnung (14) und
- mindestens einem Volumenreduzierelement (40), durch welches das freie Volumen des Produktbehälters (10) zwischen dem Verteilerboden (20) und der Produktbehälteröffnung (14) reduziert ist,
**dadurch gekennzeichnet,**
**dass** das mindestens eine Volumenreduzierelement (40) am Verteilerboden (20) an der der Produktbehälteröffnung (14) zugewandten Seite (20-1) des Verteilerbodens (20) lösbar anbringbar ist.

2. Produktbehälter (10) nach Anspruch 1,
- bei welchem das Volumenreduzierelement (40) einen Bodenbereich (42) und einen Mantel (41) aufweist und
- bei welchem der Bodenbereich (42) des Volumenreduzierelementes (40) auf dem Verteilerboden (20) lösbar anbringbar ist.

3. Produktbehälter (10) nach einem der vorangehenden Ansprüche,
bei welchem das Volumenreduzierelement (40) konusförmig ist und insbesondere die Form eines senkrechten Kreiskegels aufweist.

4. Produktbehälter (10) nach einem der vorangehenden Ansprüche,
bei welchem das Volumenreduzierelement (40) im Übergang zwischen Mantel (41) und Bodenbereich (42) eine umlaufende Dichtung (43) aufweist, mit welcher das Volumenreduzierelement (40) auf dem Verteilerboden (20) anordenbar ist.

5. Produktbehälter (10) nach einem der vorangehenden Ansprüche,
bei welchem der Verteilerboden (20) ein Anströmelement (30) aufweist, welches am Verteilerboden (20) auf der der Gefäßöffnung (14) zugewandten Seite (20-1) des Verteilerbodens (20) angebracht ist.

6. Produktbehälter (10) nach Anspruch 5,
- bei welchem das Volumenreduzierelement (40) das Anströmelement (30) im am Verteilerboden (20) angebrachten Zustand umschließt und/oder
- bei welchem das Anströmelement (30) formähnlich zum Volumenreduzierelement (40) ausgebildet ist, insbesondere mit gleicher geometrischer Form wie das Volumenreduzierelement (40).

7. Produktbehälter (10) nach einem der vorangehenden Ansprüche,
- bei welchem auf der der Produktbehälteröffnung (14) zugewandten Seite (20-1) des Verteilerbodens (20) eine Hebeeinrichtung (50) ausgebildet ist, welche eingerichtet ist, das mindestens eine Volumenreduzierelement (40) zwischen mindestens einer ersten Stellung (A) und einer zweiten Stellung (B) zu bewegen, und
- bei welchem das Volumenreduzierelement (40) in der ersten Stellung (A) mit seinem Boden (42) am Verteilerboden (20) anliegt und in der zweiten Stellung (B) mit seinem Boden (42) vom Verteilerboden (20) beabstandet ist.

8. Produktbehälter (10) nach einem der vorangehenden Ansprüche,
bei welchem eine Mehrzahl von Volumenreduzierelementen (40-1, 40-2) ausgebildet ist, welche eine unterschiedliche Größe aufweisen.

9. Produktbehälter (10) nach Anspruch 8,
bei welchem zwei Volumenreduzierelemente (40-1, 40-2) ausgebildet sind und ineinander geschachtelt sind.

10. Produktbehälter (10) nach einem der vorangehenden Ansprüche,
bei welchem durch ein Volumenreduzierelement (40, 40-1, 40-2) das freie Volumen des Produktbehälters (10) zwischen dem Verteilerboden (20) und der Produktbehälteröffnung (14) in einem Bereich von etwa 38 % bis etwa 69 % reduziert ist.

11. Wirbelschichtanlage (1),
mit:
- einem Produktbehälter (10) nach einem der vorangehenden Ansprüche und
- einem Prozessbehälter (50), welcher sich mit einer Prozessbehälteröffnung (54) an die Produktbehälteröffnung (14) des Produktbehälters (10) anschließt oder an diese anschließbar ist.

## Claims

1. Product container for a fluidized bed system (1), comprising:
- a product container wall (12),
- a product container bottom (13);
- a product container opening (14) opposite to the product container bottom (13),
- a distributor base (20) between the product container bottom (13) and the product container opening (14),
- at least one volume reducing element (40) which reduces the free volume of the product container (10) between the distributor base (20) and the product container opening (14),
**characterized in that**
the at least one volume reducing element (40) can be mounted detachably on the distributor base (20) on the side (20-1) of the distributor base (20) facing the product container opening (14).

2. Product container (10) as claimed in claim 1,
- wherein the volume reducing element (40) has a bottom area (42) and a shell (41) and
- wherein the bottom area (42) of the volume reducing element (40) can be mounted detachably on the distributor base (20).

3. Product container (10) as claimed in one of the preceding claims, wherein the volume reducing element (40) is conically shaped and has in particular the shape of a vertical circular cone.

4. Product container (10) as claimed in one of the preceding claims, wherein the volume reducing element (40) has a circumferential seal (43) at the transition between shell (41) and bottom area (42) by means of which the volume reducing element (40) can be arranged on the distributor base (20).

5. Product container (10) as claimed in one of the preceding claims, wherein the distributor base (20) has an inflow element (30) which is mounted on the distributor base (20) on the side of the distributor base (20) facing the container opening (14).

6. Product container (10) as claimed in claim 5,
- wherein the volume reducing element (40) encloses the inflow element (30) when mounted on the distributor base (20) and/or
- wherein the inflow element (30) is formed similar to the volume reducing element (40), in particular has the same geometrical shape as the volume reducing element (40).

7. Product container (10) as claimed in one of the preceding claims,
- wherein a lifting device (50) is formed on the side of the distributor base (20) facing the product container opening (14) which is adapted to move the at least one volume reducing element (40) between at least one first position (A) and a second position (B) and
- wherein, in the first position (A), the volume reducing element (40) abuts on the the distributor base (20) with its bottom (42) and, in the second position (B), is at a distance from the distributor base (20) with its bottom (42).

8. Product container (10) as claimed in one of the preceding claims, wherein a plurality of volume reducing elements (40-1, 40-2) is formed having different dimensions.

9. Product container (10) as claimed in claim 8, wherein two volume reducing elements (40-1, 40-2) are formed which are nested into one another.

10. Product container (10) as claimed in one of the preceding claims, wherein the free volume of the product container (10) between the distributor base (20) and the product container opening (14) is reduced in a range from about 38% to about 69% by a volume reducing element (40, 40-1, 40-2) .

11. Fluidized bed system (10), comprising:
- a product container (10) as claimed in one of the preceding claims and
- a process container (50) which is connected to the product container opening (14) of the product container (10) with its process container opening (54) or can be connected thereto.

## Revendications

1. Récipient de produit pour une installation à lit fluidisé (1), comprenant:
- une paroi de récipient de produit (12),
- un fond de récipient de produit (13),
- une ouverture de récipient de produit (14) située en vis-à-vis du fond de récipient de produit (13),
- un fond distributeur (20) entre le fond de récipient de produit (13) et l'ouverture de récipient de produit (14), et
- au moins un élément de réduction de volume (40) par l'intermédiaire duquel le volume libre du récipient de produit (10) entre le fond distributeur (20) et l'ouverture de récipient de produit (14) est réduit,
**caractérisé par le fait**
**que** ledit au moins un élément de réduction de volume (40) peut être monté de manière amovible sur le fond distributeur (20) sur le côté (20-1) du fond distributeur (20), qui montre vers l'ouverture de récipient de produit (14) .

2. Récipient de produit (10) selon la revendication 1,
- dans lequel l'élément de réduction de volume (40) présente une zone de fond (42) et une enveloppe (41), et
- dans lequel ladite zone de fond (42) de l'élément de réduction de volume (40) peut être montée de manière amovible sur le fond distributeur (20).

3. Récipient de produit (10) selon l'une quelconque des revendications précédentes, dans lequel l'élément de réduction de volume (40) est conique et, en particulier, présente la forme d'un cône circulaire perpendiculaire.

4. Récipient de produit (10) selon l'une quelconque des revendications précédentes, dans lequel l'élément de réduction de volume (40) présente un joint d'étanchéité circonférentiel (43) au niveau de la transition entre ladite enveloppe (41) et la zone de fond (42), avec lequel l'élément de réduction de volume (40) peut être disposé sur le fond distributeur (20).

5. Récipient de produit (10) selon l'une quelconque des revendications précédentes, dans lequel le fond distributeur (20) comprend un élément d'amenée (30) qui est monté sur le fond distributeur (20) sur le côté (20-1) du fond distributeur (20), qui montre vers l'ouverture de récipient (14).

6. Récipient de produit (10) selon la revendication 5,
- dans lequel l'élément de réduction de volume (40) entoure ledit élément d'amenée (30) lorsqu'il est monté sur le fond distributeur (20) et/ou
- dans lequel l'élément d'amenée (30) est réalisé de manière à présenter une forme similaire à celle de l'élément de réduction de volume (40), en particulier à avoir la même forme géométrique que l'élément de réduction de volume (40).

7. Récipient de produit (10) selon l'une quelconque des revendications précédentes,
- dans lequel un dispositif de levage (50) est réalisé sur le côté (20-1) du fond distributeur (20), qui montre vers l'ouverture de récipient de produit (14), et est agencé pour déplacer ledit au moins un élément de réduction de volume (40) entre au moins une première position (A) et une deuxième position (B), et
- dans lequel, dans la première position (A), l'élément de réduction de volume (40) s'applique par son fond (42) contre le fond distributeur (20) et, dans la deuxième position (B), son fond (42) est espacé du fond distributeur (20).

8. Récipient de produit (10) selon l'une quelconque des revendications précédentes, dans lequel une pluralité d'éléments de réduction de volume (40-1, 40-2) sont réalisés qui présentent une taille différente.

9. Récipient de produit (10) selon la revendication 8, dans lequel deux éléments de réduction de volume (40-1, 40-2) sont réalisés et sont emboîtés l'un dans l'autre.

10. Récipient de produit (10) selon l'une quelconque des revendications précédentes, dans lequel le volume libre du récipient de produit (10) entre le fond distributeur (20) et l'ouverture de récipient de produit (14) est réduit par un élément de réduction de volume (40, 40-1, 40-2) dans une plage allant d'environ 38 % à environ 69 %.

11. Installation à lit fluidisé (1) comprenant:
- un récipient de produit (10) selon l'une quelconque des revendications précédentes et
- un récipient de processus (50) qui se raccorde ou peut être raccordé, par une ouverture de récipient de processus (54), à l'ouverture de récipient de produit (14) du récipient de produit (10).
